# EUROPEAN PATENT SPECIFICATION

(11) **EP 2 944 412 B1**
(45) Date of publication and mention of the grant of the patent: **02.11.2016**
(21) Application number: 15157127.0
(22) Date of filing: 02.03.2015
(51) Int. Cl.: B23K 26/00, B23K 26/067, B23K 26/06, C03B 33/09, C03B 33/02

(54) **Method and apparatus for laser cutting of transparent media**
Verfahren und Vorrichtung zum Laserschneiden von transparenten Medien
Procédé et appareil pour la découpe laser des médias transparente

(30) Priority: 16.05.2014 LT 2014504
(43) Date of publication of application: 18.11.2015
(73) Proprietor: Valstybinis moksliniu tyrimu institutas Fiziniu ir technologijos mokslu centras, 02300 Vilnius (LT); ELAS, UAB, 02300 Vilnius (LT)
(72) Inventor: Raciukaitis, Gediminas, 06226 Vilnius (LT); Gedvilas, Mindaugas, 08446 Vilnius (LT); Stankevic, Valdemar, 21171 Rudiskes (LT)
(74) Representative: Draugeliene, Virgina Adolfina

(56) References cited:
- JP-A- 2006 305 586
- JP-A- 2008 272 794
- US-A1- 2007 202 619
- US-A1- 2007 235 418

## Description

The invention relates to cutting of transparent materials. More specifically, this invention relates to cutting of transparent media by lasers and is based on the use of radiation of an ultra-short pulse laser with two wavelengths and their temporal and/or spatial alignment.

United States patent application No US20070202619, published on August 30, 2007, describes the laser material processing device and method. The laser device includes a source of light radiation, which simultaneously generates radiation with two wavelengths. Focal positions of both beams are different inside a wafer to cut. There are three groups of locally modified material. One group consists of two layers. Only one group of modification can be formed at the same time. The locally modified groups are spatially separated, adjusted or overlapping along a predetermined cutting line.

JP 2008 272794 A (CYBER LASER KK) 13 November 2008 (2008-11-13) discloses laser beam machining method and apparatus by applying two laser beams with different wavelengths and their relative delay when the emission is arriving to a work piece. Both laser beams are focused into one focal point. The known method relates to the removal of insulator layers on a semiconductor device and not to cutting of transparent media.

International patent application No WO2009114375, published on September 17, 2009, describes processing of transparent materials using an ultra-short pulse laser. In the description, there are discussed methods, devices and systems for treatment of transparent materials by ultra-short pulse lasers, using them for scribing, welding, and marking the joining. For example, cracks are formed under the material surface during a single pass with the ultra-short pulse laser. Subsurface marks can be formed after minor modification of the ultra-short pulse laser processing conditions. By a proper selection of the processing conditions, these marks are distinctly visible under a certain illumination. By managing the processing parameters, it is possible to form reflective marks. The processed material can be any transparent material such as glass. In some examples of the transparent material processing, a laser beam shaper is used, which simultaneously forms a number of beams, which are focused at different planes inside the processed material, thus significantly increasing the processing speed. Laser cutting regime utilizing a few laser beams with different wavelengths is mentioned in the claims.

International patent application No WO2012006736A2, published on January 19, 2012, describes the material processing method using filamentation phenomenon. The invention describes an internal processing technique for transparent media as a preparation step for its cleavage. The medium is exposed by a focused pulsed laser beam with its pulse energy and duration chosen to be sufficient to induce the filamentation phenomenon in the processed transparent medium. The transparent medium can be moved relative to the laser beam in order to form an additional filament in one or more places inside the medium. These filaments form an array of modification, which describes the track where the medium can be cleaved. The laser beam parameters can be modified to control the filament length and location. In the most appropriate case, V-shaped grooves or channels are formed with slanted edge of the cleavage. It is preferably to use the radiation generated by a high repetition rate laser in order to reduce the threshold energy required for filament formation, increase of the filament length, heating of the area modified by the filament and thus reducing the damage in surrounding area, improving reproducibility and increasing the processing speed, compared with low-repetition rate lasers.

JP 2006 305586 A (CYBER LASER KK) 9 November 2006 (2006-11-09) discloses method for cutting plate-shaped body, and laser beam machining device by applying two laser beams with different wavelengths to the plate -shaped body, wherein the laser beam of a first wavelength having absorbability with respect to a plate-shaped body and the laser beam of a second wavelength having permeability with respect to the plate-shaped body. Two laser beams with different wavelengths to the plate -shaped body are simultaneously focused, where focusing point of the laser beam of the first wavelength is placed on the surface part of the plate -shaped body, and a focusing point of the laser beam of the second wavelength is placed in the inside part of the plate-shaped body, by controlling a focusing optical system.

US 2007/235418 A1 (PARK MYUNG-IL [KR] ET AL) 11 October 2007 (2007-10-11) discloses method for cutting substrate and substrate cutting apparatus comprising:
preparing a mother substrate assembly having a thin film transistor (TFT) mother substrate and a color filter mother substrate, focusing at least two laser beams onto at least two different locations spaced apart from each other on a perpendicular relative to a surface of the mother substrate assembly simultaneously; and cutting the mother substrate assembly by the at least two different focused locations.

The known methods and devices for cutting of plate-shaped bodies, preferably, transparent materials described above use focusing of laser radiation inside of transparent materials or on their surface as well as processing of transparent materials with two or more laser wavelengths simultaneously. The most common, the radiation with different wavelengths is used in order different spectral components of the radiation were focused at different depths inside the material to cut after passing the focusing optics.

The known methods and devices for cutting of transparent materials do not allow achieving the high cutting speed and quality.

The present invention seeks to improve the laser cutting speed and quality.

The proposed method for laser cutting of transparent media comprises the following steps: two pulsed beams of laser radiation with different wavelengths are directed to the transparent medium to be processed; said pulsed beams of laser radiation with different wavelengths are focused inside said transparent medium at different focal planes relative to depth of the processed transparent medium; cutting speed and quality are controlled by experimental preselection of parameters of said pulsed beams of laser radiation with different wavelengths, wherein pulses of the laser radiation beams with different wavelengths arrive to their focal planes at different time moments, where the laser radiation pulses with the longer wavelength are delayed relative to the laser radiation pulses with the shorter wavelength; the wavelengths and the pulse delay time of said pulsed beams of laser radiation are selected depending on the particular processed transparent medium so that due to optical excitation, laser radiation pulses with the shorter wavelength produce an area with increased absorption inside said transparent medium, and the delayed laser radiation pulses with the longer wavelength fall into an existing area of said higher absorption and cause directional cleavage of said transparent medium along the cutting plane. The cutting speed and quality is controlled by experimental preselection of the pulse delay time, pulse energy ratio and spatial position of the focal planes relative to each other for said two pulsed beams of laser radiation with the different wavelengths.

The longer wavelength of the laser radiation pulsed beam is selected from the near-infrared spectral region, and the shorter wavelength of the laser radiation beam is selected from the far ultraviolet spectral region. The longer wavelength of the laser radiation pulsed beam is selected from the visible spectrum region, and the shorter wavelength of the laser radiation beam is selected from the blue or ultraviolet spectral region. The shorter wavelength of laser radiation is a second or third or fourth harmonics of the laser radiation with longer wavelength. Pulse energy of the longer-wavelength laser radiation pulsed beam is about 2 to 10 times higher than the pulse energy of the shorter-wavelength laser radiation beam. Focal plane of the laser radiation beam with the longer wavelength is closer to the entrance surface relative to depth of said transparent medium than the focal plane of the laser radiation beam with the shorter wavelength. The pulsed laser radiation beam with the longer wavelength is focused inside said transparent medium in such a way that the nonlinear filamentation effect takes place.

The proposed method of laser cutting of transparent media is based on a proper selection of the main process parameters and their adjustment, where the main parameters are the relative pulse delay between radiation of these different wavelengths, pulse energy ratio and relative spatial dislocation of the focal planes of the both laser beams.

The other embodiment of the proposed invention which has an advantage is a device for laser cutting of transparent media comprising a pulsed laser source that generates two pulsed beams of laser radiation with different wavelengths, an optical focusing means to focus these pulsed beams of laser radiation with different wavelengths inside said transparent medium at different focal planes relative to depth of the processed transparent medium, and an optical means to control the parameters of the pulsed beams of laser radiation with different wavelengths, wherein it is provided with an optical delay means placed in optical path of the pulsed beam of longer-wavelength laser radiation for delay pulses of the longer-wavelength laser radiation relative to pulses of the shorter-wavelength laser radiation, an optical means for changing position of the focal plane of the longer-wavelength beam relative to the focal plane of the shorter-wavelength beam along depth of said transparent medium and it is placed in optical path of at least one of the pulsed beam of laser radiation in front of the said optical focusing means.

Said laser source which generates two pulsed beams of laser radiation with different wavelengths comprises a primary source of pulsed laser beam in optical path of which are placed optical converter configured to form two pulsed beams of different wavelengths and optical means to control the pulse energy ratio of the pulsed beams with different wavelengths.

In embodiment of proposed device according to the present invention the optical converter configured to form two pulsed beams of different wavelengths includes a polarizing beam splitter, which divides laser radiation of the primary laser source into two parts and directs them respectively to two optical paths, and a harmonic generator to convert the wavelength of the laser radiation, which is placed in the optical path of the laser radiation beam with the shorter wavelength, where in the optical path of the laser radiation beam with the longer wavelength is placed the optical delay means and the optical means for changing position of the focal plane.

In another embodiment of proposed device according to the present invention the optical converter configured to form two pulsed beams of different wavelengths is the harmonic generator which is placed in the optical path of the radiation beam of the primary laser source for converting a part of the laser radiation of the primary laser source to the laser radiation of shorter wavelength, where in the same optical path are placed the optical delay means for delay an another part of the laser radiation of the primary laser source with longer-wavelength and the optical means for changing position of the focal plane.

The optical means for controlling the pulse energy ratio of the beams with the two wavelengths includes a rotatable half-wavelength phase plates placed in the optical path of the laser radiation of the primary laser source. The optical means for changing the focal plane of the laser radiation beam with one wavelength relative to the focal plane of the laser radiation beam with the another wavelength is the laser beam expander placed at least in one of optical paths in front of said optical focusing means.

The proposed method and device for laser cutting of transparent media has, in comparison with the known methods, more parameters which can be adjusted and controlled to achieve better process performance, in particular focusing of the different wavelengths of laser radiation pulses at different focal planes which can be adjusted so that the laser radiation pulses with different wavelengths arrive at different time moments, where the laser radiation pulses with the longer wavelength are delayed relative to the shorter-wavelength radiation pulses, and for particular processed material, said pulse delay time, the spatial position of the focal planes relative to each other and pulse energy ratio of the focusable radiation can be experimentally optimized to select the optimal combination of the above parameters when a significant increase in cutting speed and quality of the transparent material takes place.

The invention is detailed explained in figures, where
FIG. 1 presents the first option of a block diagram of a device for laser cutting of transparent media.
FIG. 2 shows a cross-section of a transparent medium where the area with increased absorption induced by the short-wave radiation and directional crack and the cleavage line in the transparent material induced by the longer-wavelength radiation are presented.
FIG. 3 shown in the isometric projection of the transparent medium, where crack series which forms the cutting (fracture) line is shown.
FIG. 4 presents another option of a block diagram of a device for laser cutting of transparent media.

The proposed method of laser cutting of transparent media comprises the following sequence of operations. Two pulsed laser beam with different wavelengths are focused inside the processed medium within the cutting area at the different focal planes relative to the depth of the processed medium in such a way that these pulses of laser radiation with different wavelengths arrive at different time moments, where the pulses of laser radiation with longer wavelength are delayed relative to the pulses of laser radiation with shorter wavelength. The wavelength and pulse delay time of the said radiation beams depend on the particular medium to process and are selected in such a way that the pulses of the shorter-wavelength radiation due to optical excitation in the processes medium produce an area with increased absorption, the delayed pulses of the longer-wavelength radiation interact with this higher absorption area and induce directional cleavage of the processed medium along the cutting plane. Cutting speed and quality is controlled by experimental selection of the pulse delay time of the laser radiation pulse with different wavelengths relative each other, relative spatial position of their focal plane and pulse energy ratio of the beams with different wavelengths.

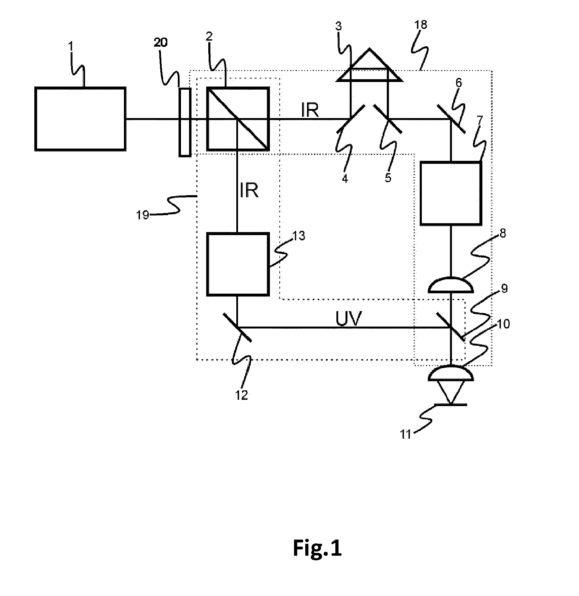

FIG. 1 presents a device according to the first option of its embodiment, in which a laser source for generating at least two wavelengths of pulsed laser radiation comprises a primary pulsed laser source 1, polarizing beam splitter 2, placed on the optical beam path of the primary pulsed laser source 1 and dividing its radiation into two beams, which are then directed to two optical paths, where wavelength of laser radiation remains unchanged in the first optical path 18 and the harmonic generator 13 is placed in the second optical path 19 to convert the radiation to a shorter wavelength. Primary pulsed laser source 1 in the most appropriate case is generated the laser radiation with a wavelength in near-infrared (IR) spectral range, in ultra-short pulses with pulse duration less than 10 picoseconds. Said harmonic generator 13 converts the laser radiation to shorter wavelength which is better absorbed by the processed material. Absorption of the most common transparent materials increases in the ultraviolet (UV) spectral range. Primary laser source 1 can be any device that generates laser radiation with the intensity sufficient to damage or modify the bulk transparent medium 11.

In the appropriate case, wavelength of the generated laser radiation is in the near- infrared (IR) spectral range and is selected from the transparency window of the processed medium. Therefore, damage or modification 14 of the material can be formed in its volume without damaging its surface. Many of the substrates used in the semiconductor industry and glasses used in displays are transparent to the infrared radiation, and laser sources with neodymium, ytterbium and titanium doped active media can be applied. The laser source can be one of the Nd:YAG, Yb:KGW, Yb:YAG, Ti:sapphire-based active media or a similar type of pulsed lasers. Selection of the laser source 1 does not limit the protection boundary of the present invention, if the laser source generates pulses of sufficient peak power in visible or near-infrared spectral range. The laser power should be high enough to generate higher harmonics and induce proper modification effects inside the material.

In the appropriate case, the laser source should generate picosecond or subpicosecond pulses. Picosecond (especially less than 10 ps) or subpicosecond pulses are also called ultra-short pulses. Ultra-short pulses lasers available on the market often generate the peak power in gigawatts range. This is because that for the same pulse energy, the peak power of a pulse is inversely proportional to the pulse duration, and thus the shorter the pulse duration, the higher its peak power. Ultra-short pulses haves such high values of peak power that during its interaction with the material, melting phase is omitted and the evaporation phase follows immediately. Processing of materials by evaporation - the so-called ablation - possesses the high accuracy, and cutting process allows reducing burr formation of the cut edges.

At high intensities, nonlinear optical effects take place in material, i.e. multiphoton absorption, ionization, self-focusing, light filament formation - filamentation and others. In the most appropriate the case, this invention is in whole or in part related to several of these effects, i.e. the focused short-wavelength radiation is absorbed in the bulk of the transparent medium and can cause ionization effect, which leads to the plasma generation, and sufficient high intensity of the long-wavelength radiation can cause filamentation effect. Due to the self-focusing phenomenon, the radiation propagates inside the transparent medium as a filament without divergence. In this way, the transparent medium can be modified in full its thickness or at least a substantial part of it. Such selective high-energy effects can lead to a smooth and straight vertical cleavage in the desired cutting plane.

On the first optical path 18, there are placed the delay line (4, 3, 5), beam diameter expander 7 and optical focusing means (8, 10) for directing the laser radiation in the volume of the processed medium 11 along the desired direction. On the optical path of the primary laser radiation source 1 in front of the polarizing beam splitter 2, there is placed the pulse energy ratio converter for the laser radiation with two different wavelengths, which include turning phase plate 20. By rotating the phase plate 20 relative to the polarizing beam splitter 2, the ratio of laser power transmitted directly and reflected at the right angle is controlled. The directly transmitted radiation continues to propagate along the first optical path 18, and the radiation reflected at right angle continues to propagate along the second optical path 19. The laser beam power per optical path has to be chosen according to the optimal cutting parameters for the transparent medium. Instead of the polarizing cube, a thin-film polarizer, Nicol or, Wollaston prism or similar components can be used. Splitting of the polarized radiation to the desired ratio and directing along of different optical paths are the general level of knowledge for professionals in the field, so the realization of this means does not limit the scope of the patent.

The harmonic generator 13, converting wavelength of the laser radiation can be designed of the nonlinear crystal, such as BBO, LiNbO3, KDP and the like, and of focusing lenses. A single nonlinear crystal is sufficient for second-harmonic generation, and generation efficiency can be increased by focusing lens placed in front of the crystal to increase the radiation intensity incident into the crystal. For the third-harmonic generation, the sum-frequency generation in additional nonlinear crystal should be utilized, combining radiation of the fundamental and second harmonics. Type, size or arrangement of the crystals and other optics does not limit the protection of the present invention, until wavelength of the incident laser radiation is converted to a shorter wavelength, i.e. the second, third or higher harmonic are generated. The delay line (4, 3, 5) can be made up of two stationary fixed mirror surface (4, 5) and the retroreflector (3) mounted on a linear actuator. Placing the system in one of the optical path, in the appropriate case in the optical path 18, where laser radiation of the fundamental harmonics with longer wavelength propagates, length of said optical path 18 can be changed, thus introducing a delay for the pulses of the fundamental harmonics in the optical path 18, in other words, the laser radiation travels longer than along the second optical path 19. It is observed that with delay pulses of the IR or visible radiation relative to pulses of UV radiation, it is possible to control the processing regime and its performance, as described below. Selection or mounting of the delay line component does not limit the protection of the present invention as long as the delay line performs its function - to delay in time the laser radiation propagating in one optical path, in this case - said first optical path 18.

The beam diameter expander 7 can be any system of concave, convex or other type of lenses capable of increasing the laser beam diameter by the desired number of times, depending on the beam expander parameters and / or change the beam divergence. In the laser system for cutting of transparent media presented in this patent application, the beam expander 7 is located in front of the optical focusing means 10. In order to move the spatial position of the focal planes for both beams relative to each other, it is sufficient to change collimation (divergence) of a single beam before the focusing means 10. If laser radiation beam of one wavelength is always focused to the same point in the system, the focal position of second laser beam can be controlled by the beam expander 7. By increasing beam divergence, the focal plane is moved away from the focusing optics (longer focus distance), while reducing the divergence, it get close to the focus lens (shorter). An additional lens 8 can be used to alignment the focal planes instead of misalignment of the beam expander.

By a proper spatial alignment of positions of the focal planes for the UV and IR radiation beams, the significant increase in cutting speed and quality of the transparent medium can be achieved. Selection of the distance between the focal planes is based on several criteria:
- evaluate how laser treatment is determined by material properties - transmittance, density and type of impurities, surface quality, refractive index and its fluctuations, and so on;
- evaluate the nonlinear effects which laser radiation experiences traveling across a transparent medium volume;
- evaluate what the impact has the laser radiation of different wavelengths and different intensity to the material (thermal, electro-dynamic, acoustic, etc.).

Selection of the focal plane positions for UV and IR/visible spectrum radiation beams and the distance between them do not restrict protection by the present invention, and specialist in this field have the option to choose the way which the best match the available properties of the workpiece and the laser system parameters.

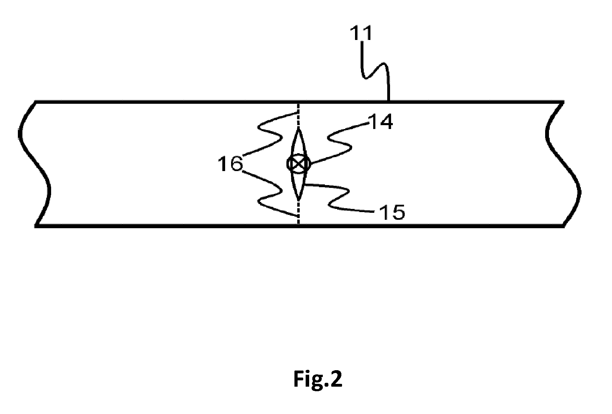

The laser beam propagating along the second optical path 19 is focused in volume of the transparent medium 11 and induces its intra-volume damage 14, as shown in Figure 2. The delayed laser beam with the IR wavelength is focused close to this damage area (14) induced by UV beam, in the most appropriate case, just above the damage (14) and causes directional intra-volume damage (cleavage) (15).

The laser beam diameter depends on parameters of the focusing optics and on the laser beam shaping. The diameter of the laser beam at focus (waist) is inversely proportional to the input diameter of the beam, i.e., the larger diameter of the beam is at the entrance of the focusing means, the smaller focus diameter spot is available. Laser radiation intensity is the radiation power per unit area. This parameter is proportional to the laser radiation power and inversely proportional to the diameter of the beam focus. In other words, the larger diameter of the beam to focus is the smaller its diameter in the focal plane, and the higher its intensity.

Optical focusing means 10 can be any lens or lens system capable of focusing the beam to sufficiently small diameter spot. By focusing the radiation, its intensity increases at the focal point, and nonlinear optical effects starts to appear in the processed material. In the most appropriate case, the focusing optics should be transparent to both used wavelengths of radiation, for example UV and IR radiations, if these wavelengths of the radiation are used in the system for processing system of transparent media according the present invention. The appropriate focusing optics should be mounted in such a way that its position can be tuned perpendicularly to the surface of the processed material. In case of any inaccuracy of the positioning system or workpiece, focusing optics can compensate these deviations and keep the focal position of the laser beams inside the medium volume, at a certain distance from its surface.

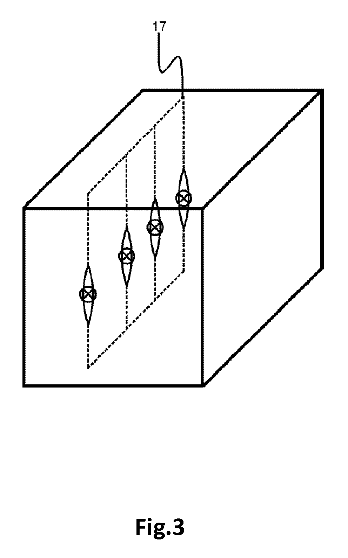

The UV radiation pulses propagating along the second optical path 19 and the IR laser pulses delayed in the first optical path 18 are scanned through a transparent medium 11 in order to form the cutting line 17, as shown in Fig. 3. The transparent medium is cleaved later along this cutting line. Scanning by laser radiation is achieved by attaching a transparent medium to positioning equipment with micro-/nanometric precision and movement by this equipment relative to the position of the incident radiation. Depending on parameters of the particular transparent medium, distance between adjusted modifications along the cutting line is selected. Preferably, a transparent medium 11 is scanned one time by laser radiation, however, the number of scans should not limit protection by the present invention, the most important, that said transparent medium is separated into pieces (cut through, diced). The number of scans depends also on the workpiece thickness.

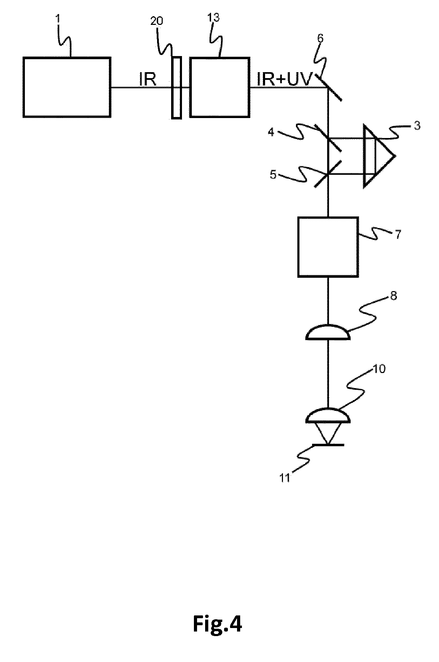

FIG. 4 presents another embodiment of the laser cutting device, where the laser radiation with two wavelengths is formed by a converter, the better the harmonic generator 13, placed in the optical path of the primary laser source 1 and which converts part of the incoming laser radiation from the primary laser source 1 to the radiation with the shorter wavelength. In this case, the beam of the pulsed near-infrared primary laser source 1 is directed through a half-wavelength phase plates 20 to the harmonic generator 13, which converts part of the radiation to a shorter wavelength UV radiation. This UV radiation along with the remaining unconverted radiation of the IR or visible spectrum propagates along the same optical path towards the working area. In this embodiment, temporal delay of pulses with one of the wavelengths is possible as well. The delay line (4, 3, 5), where selectively only radiation with one of the wavelengths, the better of longer wavelength, is directed may be used.

For a better understanding of the present invention, the operation principle of the device according to the proposed cutting method is provided. The examples do not restrict the patent protection, but allows a better understanding of the present invention.

In Figure 1 it is shown, that radiation beam of the primary pulsed laser source 1, preferably generating pulses with less than 10 ps duration at the 1064 nm wavelength is directed to the beam splitter 2. The beam splitter 2 divides the beam into two parts according to the most appropriate processing parameters for the particular transparent medium and directs them to the two optical paths 18 and 19. The third harmonic generator 13 which converts the laser beam wavelength from the near-infrared wavelength (IR) to ultraviolet wavelength (UV), in the most appropriate case of 355 nm, is placed in the second optical path 19. Laser beams with fundamental wavelength and its harmonics are directed to the focusing optics 10, such as the lens and are focused inside the processed transparent medium. The focusing lens 10 should be transparent to both working wavelengths of the radiation and be able to focus on the beams to the relatively small spot so that non-linear effects can be induced in the processed transparent medium by sufficient high laser radiation energy. Said transparent medium should have a low absorption in IR or visual spectral range, and the processing takes place only at the focal point due to nonlinear effects, and a substantial absorption in the UV spectral range. This processing method is suitable for materials as sapphire, glass, tempered glass, quartz, etc. In case of silicon carbide, the first wavelength should be selected in the wavelength range > 800 nm, and the second beam with the wavelength < 500 nm. Position of the focusing lens 10 can be varied to change the focal planes of both two beams inside the processed material, thus strongly affecting the processing performance.

As usually, absorption coefficient of the processed transparent medium is higher in the UV region, the initial damage inside the medium is produced namely by the UV radiation. Meanwhile, most of transparent media are well transparent to the 1064 nm radiation. Therefore, it is more difficult to produce the initial intra-volume damage using this radiation. Using the UV and IR pulses one after the other, the UV laser beam pulse creates damage or strongly absorbing state (plasma) inside the transparent medium close to the focal plane, and then the IR laser beam is much better absorbed and can induce cleaving thermal stress, and relatively low IR beam power is required for this. In a special case, the IR beam is of the intensity needed for the nonlinear self-focusing and formation of filament, which propagates essentially perpendicular to the workpiece surface. The UV-beam induced damage is a crack inside the transparent medium. Due to the extremely small spot diameter of the focused beam, when sufficient high pulse energy is applied from the laser source 1, and due to increased absorption for IR laser beam in the UV modified area, a nonlinear filamentation effect occurs. Filamentation is a phenomenon when laser radiation can propagate within transparent material without experiencing any diffraction due to focusing. Light filaments are formed during filamentation and they are able to produce long linear cracks (15) spreading over whole thickness of the transparent material. When such crack reached a damage (14) produced by the UV radiation, the transparent medium to be cut (11) cleaves making the break lines 16 shown in FIG. 2.

Time, needed to delay the IR laser radiation pulses is determined by performing experiments with the particular material. In one case, the maximum cutting efficiency is achieved as described above, when the IR pulses are propagating through the increased absorption zone which was formed before by the weak UV radiation pulse. In this case, the delay should be sufficient long to allow decay for plasma formed by the UV radiation. Otherwise, the IR pulse propagates through the higher absorption zone even at the moment, when plasma induced by the UV radiation pulse is presenting. Plasma has a strong absorption for the incident radiation, and therefore interaction with the material and processing performance can be different and in the previous case with longer delay.

The pulse delay time for one of the wavelengths radiation beams should not limit the protection according to the present invention, and specialist in the field can implement their knowledge for the proper selection of the delay time, depending on the changes in the processing efficiency (speed and quality) of a particular material.

Using the above described method and device, it is possible to cut or scribe a transparent medium by using use of two wavelengths of laser radiation, combining temporal delay of the laser radiation pulses with different spectrum, position of the focal planes of the beams relative to each other and the pulse energy ratio between beams with different wavelengths. Significant increase in cutting speed and quality for the transparent medium can be achieved by experimental selection of these parameters for a particular processed material.

## Claims

1. Method for laser cutting of transparent media comprising the following steps:
two pulsed beams (IR, UV) of laser radiation with different wavelengths are directed to the transparent medium (11) to be processed;
said pulsed beams (IR, UV) of laser radiation with different wavelengths are focused inside said transparent medium (11) at different focal planes relative to depth of the processed transparent medium (11);
cutting speed and quality are controlled by experimental preselection of parameters of said pulsed beams of laser radiation with different wavelengths, **characterized in that** pulses of the laser radiation beams (IR, UV) with different wavelengths arrive to their focal planes at different time moments, wherein the laser radiation pulses with the longer wavelength are delayed relative to the laser radiation pulses with the shorter wavelength;
the wavelengths and the pulse delay time of said pulsed beams of laser radiation are selected depending on the particular processed transparent medium so that due to optical excitation,
laser radiation pulses with the shorter wavelength produce an area with increased absorption inside said transparent medium, and
the delayed laser radiation pulses with the longer wavelength fall into an existing area of said higher absorption and cause directional cleavage of said transparent medium along the cutting plane;
the cutting speed and quality are controlled by experimental preselection of the pulse delay time, pulse energy ratio and spatial position of the focal planes relative to each other for said two pulsed beams of laser radiation with the different wavelengths.

2. Method according to claim 1, **characterized in that** the longer wavelength of the pulsed laser radiation beam is selected from the near-infrared spectral region, and the shorter wavelength of the laser radiation beam is selected from the far ultraviolet spectral region.

3. Method of any one of claims 1-2, **characterized in that** the longer wavelength of the pulsed laser radiation beam is selected from the visible spectrum region, and the shorter wavelength of the laser radiation beam is selected from the blue or ultraviolet spectral region.

4. Method of any one of claims 1-3, **characterized in that** the shorter wavelength of laser radiation is the second or third or fourth harmonics of the laser radiation with longer wavelength.

5. Method according to any one of claims 1-4, **characterized in that** pulse energy of the laser radiation beam with the longer-wavelength is about 2 to 10 times higher than the pulse energy of the laser radiation beam with the shorter wavelength.

6. Method according to any of claims 1-5, **characterized in that** focal plane of the laser radiation beam with the longer-wavelength is closer to the entrance surface relative to depth of said transparent medium than the focal plane of the laser radiation beam with the shorter wavelength.

7. Method according to any one of claims 1-6, **characterized in that** the pulsed laser radiation beam with the longer wavelength is focused inside said transparent medium in such a way that the nonlinear filamentation effect takes place.

8. Device for laser cutting of transparent media comprising a pulsed laser source that generates two pulsed beams of laser radiation with different wavelengths,
an optical focusing means (10) to focus these pulsed beams of laser radiation with different wavelengths inside said transparent medium (11) at different focal planes relative to depth of the processed transparent medium (11), and
an optical means to control the parameters of the pulsed beams of laser radiation with different wavelengths, **characterized in that** it is provided with
- an optical delay means (4, 3, 5) placed in optical path of the pulsed beam (IR) of the longer-wavelength laser radiation for delay pulses of the longer-wavelength laser radiation relative to pulses of the shorter-wavelength laser radiation beam (UV),
- an optical means (7) for changing position of the focal plane of the longer-wavelength beam (IR) relative to the focal plane of the shorter-wavelength beam (UV) along depth of said transparent medium (11) and it is placed in optical path of at least one of the pulsed laser radiation beam in front of the said optical focusing means(10),
said laser source which generates two pulsed beams of laser radiation with different wavelengths comprises a primary source (1) of pulsed laser beam in optical path of which are placed an optical converter configured to form two pulsed beams (IR, UV) of different wavelengths and an optical means (20) to control the pulse energy ratio of the pulsed beams with different wavelengths.

9. Device according to claim 8, **characterized in that** the optical converter configured to form two pulsed beams of different wavelengths includes
a polarizing beam splitter (2), which divides laser radiation of the primary laser source (1) into two parts and directs them respectively to two optical paths (18, 19), and
a harmonic generator (13) to convert the wavelength of the laser radiation and which is placed in the optical path (19) of the shorter-wavelength laser radiation beam, where in the optical path (18) of the longer-wavelength laser radiation beam is placed the optical delay means (4, 3, 5) and the optical means (7) for changing position of the focal plane.

10. Device according to claim 8, **characterized in that** the optical converter configured to form two pulsed beams of different wavelengths is the harmonic generator (13) which is placed in the optical path of the radiation beam of the primary laser source (1) for converting a part of the laser radiation of the primary laser source (1) to the laser radiation of shorter wavelength, where in the same optical path are placed the optical delay means (4, 3, 5) for delay an another part of the laser radiation of the primary laser source (1) with longer-wavelength and the optical means (7) for changing relative position of the focal plane.

11. Device according to any one of claims 8-10, **characterized in that** the optical means for controlling the pulse energy ratio of the beams with the two wavelengths includes a rotatable half-wavelength phase plate (20) placed in the optical path of the laser radiation of the primary laser source (1).

12. Device according to any one of claims 8-11, **characterized in that** the optical means for changing the focal plane of the laser radiation beam with one wavelength relative to the focal plane of the laser radiation beam with the another wavelength is the laser beam expander (7) placed at least in one of these optical paths (18, 19) in front of said optical focusing means (10).

## Patentansprüche

1. Verfahren zum Laserschneiden transparenter Medien umfassend die folgenden Schritte:
zwei gepulste Strahlen (IR, UV) von Laserstrahlung mit verschiedenen Wellenlängen werden zu dem zu verarbeitenden transparenten Medium (11) gelenkt;
diese gepulsten Strahlen (IR, UV) von Laserstrahlung mit verschiedenen Wellenlängen werden in dem transparenten Medium (11) auf verschiedenen Brennebenen fokussiert relativ zur Tiefe des verarbeiteten transparenten Mediums (11);
Schnittgeschwindigkeit und -qualität werden durch experimentelle Vorauswahl der Parameter der gepulsten Strahlen von Laserstrahlung mit verschiedenen Wellenlängen gesteuert, **dadurch gekennzeichnet, dass**
Impulse der Laserstrahlen (IR, UV) mit verschiedenen Wellenlängen ihre Brennebenen zu verschiedenen Zeitpunkten erreichen, wobei die Laserstrahlungsimpulse mit längerer Wellenlänge gegenüber den Laserstrahlungsimpulsen mit kürzerer Wellenlänge verzögert sind;
die Wellenlängen und die Verzögerungszeit der gepulsten Strahlen der Laserstrahlung abhängig von dem bestimmten transparenten Medium gewählt werden, so dass aufgrund von optischer Anregung Laserstrahlungsimpulse mit kürzerer Wellenlänge einen Bereich mit erhöhter Absorption im Inneren des transparenten Mediums hervorbringen, und
die verzögerten Laserstrahlungsimpulse mit längerer Wellenlänge in einen bestehenden Bereich dieser höheren Absorption fallen und eine Spaltung des transparenten Mediums entlang der Schnittebene bewirken;
die Schnittgeschwindigkeit und -qualität durch experimentelle Vorauswahl der Impulsverzögerungszeit, des Pulsenergieverhältnisses und der räumlichen Position der Brennebenen relativ zueinander für die zwei gepulsten Strahlen der Laserstrahlung mit verschiedenen Wellenlängen kontrolliert wird.

2. Verfahren nach Anspruch 1, **dadurch gekennzeichnet, dass** die längere Wellenlänge des gepulsten Laserstrahls aus dem nahen Infrarotspektralbereich gewählt wird und die kürzere Wellenlänge des Laserstrahls aus dem fernen Ultraviolettspektralbereich gewählt wird.

3. Verfahren nach einem der Ansprüche 1 bis 2, **dadurch gekennzeichnet, dass** die längere Wellenlänge des gepulsten Laserstrahls aus dem sichtbaren Spektralbereich gewählt wird und die kürzere Wellenlänge des Laserstrahls aus dem blauen oder ultravioletten Spektralbereich gewählt wird.

4. Verfahren nach einem der Ansprüche 1 bis 3, **dadurch gekennzeichnet, dass** die kürzere Wellenlänge der Laserstrahlung die zweite oder dritte oder vierte Harmonische der Laserstrahlung mit längerer Wellenlänge ist.

5. Verfahren nach einem der Ansprüche 1 bis 4, **dadurch gekennzeichnet, dass** die Impulsenergie des Laserstrahls mit längerer Wellenlänge ungefähr zwei bis zehn Mal höher ist als die Impulsenergie des Laserstrahls mit kürzerer Wellenlänge.

6. Verfahren nach einem der Ansprüche 1 bis 5, **dadurch gekennzeichnet, dass** die Brennebene des Laserstrahls mit der längeren Wellenlänge näher an der Eintrittsfläche relativ zur Tiefe des transparenten Mediums ist als die Brennebene des Laserstrahls mit der kürzeren Wellenlänge.

7. Verfahren nach einem der Ansprüche 1 bis 6, **dadurch gekennzeichnet, dass** der gepulste Laserstrahl mit längerer Wellenlänge in dem transparenten Medium so fokussiert wird, dass der nicht-lineare Filamentierungseffekt stattfindet.

8. Vorrichtung zum Laserschneiden transparenter Medien umfassend eine gepulste Laserquelle, die zwei gepulste Strahlen von Laserstrahlung mit verschiedenen Wellenlängen generiert,
ein optisches Fokussierungsmittel (10), um diese gepulsten Strahlen Laserstrahlung mit verschiedenen Wellenlängen in dem transparenten Mediums (11) auf verschiedene Brennebenen relativ zur Tiefe des verarbeiteten transparenten Mediums (11) zu fokussieren, und
ein optisches Mittel, um die Parameter der gepulsten Strahlen Laserstrahlung mit verschiedenen Wellenlängen zu steuern, **dadurch gekennzeichnet, dass** es
- mit einem optischen Verzögerungsmittel (4, 3, 5) versehen ist, das im optischen Weg des gepulsten Strahls (IR) der Laserstrahlung mit längerer Wellenlänge zur Verzögerung der Impulse der Laserstrahlung mit längerer Wellenlänge gegenüber den Impulsen des Laserstrahls (UV) mit kürzerer Wellenlänge angeordnet ist,
- mit einem optischen Mittel (7) zur Veränderung der Position der Brennebene des Strahls mit längerer Wellenlänge (IR) gegenüber der Brennebene des Strahls mit kürzerer Wellenlänge (UV) entlang der Tiefe des transparenten Mediums (11) versehen ist und dieses im optischen Weg des wenigstens einen gepulsten Laserstrahls vordem optischen Fokussierungsmittel (10) angeordnet ist,
die Laserquelle, die zwei gepulste Strahlen Laserstrahlung mit verschiedenen Wellenlängen generiert, eine Primärquelle (1) eines gepulsten Laserstrahls umfasst, in dessen optischen Weg ein optischer Wandler angeordnet ist, der so konfiguriert ist, dass er zwei gepulste Strahlen (IR, UV) verschiedener Wellenlängen bildet und ein optisches Mittel (20) zur Steuerung des Pulsenergieverhältnisses der gepulsten Strahlen verschiedener Wellenlängen angeordnet ist.

9. Vorrichtung nach Anspruch 8, **dadurch gekennzeichnet, dass** der optische Wandler, der zur Bildung von zwei gepulsten Strahlen verschiedener Wellenlängen konfiguriert ist, umfasst:
einen polarisierenden Strahlenteiler (2), der Laserstrahlung der primären Laserquelle (1) in zwei Teile teilt und diese zu jeweils zwei optischen Wegen (18, 19) lenkt, und
ein Harmonische-Generator (13), um die Wellenlänge der Laserstrahlung umzuwandeln, der im optischen Weg (19) des Laserstrahls mit kürzerer Wellenlänge angeordnet ist, wobei
im optischen Weg (18) des Laserstrahls mit längerer Wellenlänge das optische Verzögerungsmittel (4, 3, 5) und das optische Mittel (7) zur Veränderung der Position der Brennebene angeordnet sind.

10. Vorrichtung nach Anspruch 8, **dadurch gekennzeichnet, dass** der optische Wandler, der zur Bildung zweier gepulster Strahlen verschiedener Wellenlängen konfiguriert ist, der Harmonische-Generator (13) ist, der im optischen Weg des Strahls der primären Laserquelle (1) zur Umwandlung eines Teils der Laserstrahlung der primären Laserquelle (1) in Laserstrahlung mit kürzerer Wellenlänge angeordnet ist, wobei im gleichen optischen Weg die optischen Verzögerungsmittel (4, 3, 5) zur Verzögerung eines anderen Teils der Laserstrahlung der primären Laserquelle (1) mit längerer Wellenlänge und das optische Mittel (7) zur Veränderung der relativen Position der Brennebene angeordnet sind.

11. Vorrichtung nach einem der Ansprüche 8 bis10, **dadurch gekennzeichnet, dass** die optischen Mittel zur Steuerung des Pulsenergieverhältnisses der Strahlen mit den zwei Wellenlängen eine Halbwellenphasenplatte (20) umfasst, die im optischen Weg der Laserstrahlung der primären Laserquelle (1) angeordnet ist.

12. Vorrichtung nach einem der Ansprüche 8 bis 11, **dadurch gekennzeichnet, dass** das optische Mittel zur Veränderung der Brennebene des Laserstrahls mit einer Wellenlänge gegenüber der Brennebene des Laserstrahls mit der anderen Wellenlänge der Laserstrahl-Expander (7) ist, der in wenigstens einem der optischen Wege (18, 19) vor dem optischen Fokussierungsmittel (10) angeordnet ist.

## Revendications

1. Procédé de découpe au laser de supports transparents, comprenant les étapes suivantes :
deux faisceaux pulsés (IR, UV) de rayonnement laser de longueurs d'onde différentes sont dirigés sur le support transparent (11) à traiter ;
lesdits faisceaux pulsés (IR, UV) de rayonnement laser de longueurs d'onde différentes sont focalisés à l'intérieur dudit support transparent (11) à des plans focaux différents par rapport à la profondeur du support transparent traité (11) ;
la vitesse et la qualité de coupe sont réglées par présélection expérimentale de paramètres desdits faisceaux pulsés de rayonnement laser de longueurs d'onde différentes, **caractérisé en ce que** :
les impulsions des faisceaux de rayonnement laser (IR, UV) de longueurs d'onde différentes arrivent à leurs plans focaux à des instants différents, les impulsions de rayonnement laser de longueur d'onde supérieure étant retardées par rapport aux impulsions de rayonnement laser de longueur d'onde inférieure ;
les longueurs d'onde et le temps de retard des impulsions desdits faisceaux pulsés de rayonnement laser sont choisis en fonction du support transparent particulier traité, de manière que du fait de l'excitation optique, les impulsions de rayonnement laser de longueur d'onde inférieure produisent une zone d'absorption accrue à l'intérieur dudit support transparent, et
les impulsions retardées de rayonnement laser de longueur d'onde supérieure tombent sur une zone existante présentant ladite absorption accrue et engendrent un clivage directionnel dudit support transparent le long du plan de coupe ;
la vitesse et la qualité de coupe sont réglées par présélection expérimentale du temps de retard des impulsions, du rapport d'énergie pulsée et de la position spatiale des plans focaux l'un par rapport à l'autre pour lesdits deux faisceaux pulsés de rayonnement laser de longueurs d'onde différentes.

2. Procédé selon la revendication 1, **caractérisé en ce que** la longueur d'onde supérieure du faisceau pulsé de rayonnement laser est choisie dans la région spectrale du proche infrarouge, et la longueur d'onde inférieure du faisceau de rayonnement laser est choisie dans la région spectrale de l'ultraviolet lointain.

3. Procédé selon l'une quelconque des revendications 1 et 2, **caractérisé en ce que** la longueur d'onde supérieure du faisceau pulsé de rayonnement laser est choisie dans la région du spectre visible, et la longueur d'onde inférieure du faisceau de rayonnement laser est choisie dans la région spectrale du bleu ou de l'ultraviolet.

4. Procédé selon l'une quelconque des revendications 1 à 3, **caractérisé en ce que** la longueur d'onde inférieure de rayonnement laser est le deuxième ou le troisième ou encore le quatrième harmonique du rayonnement laser de longueur d'onde supérieure.

5. Procédé selon l'une quelconque des revendications 1 à 4, **caractérisé en ce que** l'énergie pulsée du faisceau de rayonnement laser de longueur d'onde supérieure est environ 2 à 10 fois plus élevée que l'énergie pulsée du faisceau de rayonnement laser de longueur d'onde inférieure.

6. Procédé selon l'une quelconque des revendications 1 à 5, **caractérisé en ce que** le plan focal du faisceau de rayonnement laser de longueur d'onde supérieure est plus proche de la surface d'entrée rapportée à la profondeur dudit support transparent que le plan focal du faisceau de rayonnement laser de longueur d'onde inférieure.

7. Procédé selon l'une quelconque des revendications 1 à 6, **caractérisé en ce que** le faisceau pulsé de rayonnement laser de longueur d'onde supérieure est focalisé à l'intérieur dudit support transparent, de telle que sorte que l'effet de filamentation non linéaire se produit.

8. Dispositif destiné à la découpe au laser de supports transparents, comprenant une source de laser pulsé engendrant deux faisceaux pulsés de rayonnement laser de longueurs d'onde différentes,
un moyen de focalisation optique (10) destiné à focaliser ces faisceaux pulsés de rayonnement laser de longueurs d'onde différentes à l'intérieur dudit support transparent (11) à des plans focaux différents par rapport à la profondeur du support transparent traité (11), et
un moyen optique destiné à régler les paramètres des faisceaux pulsés de rayonnement laser de longueurs d'onde différentes, **caractérisé en ce qu'**il est pourvu de :
- un moyen de retard optique (4, 3, 5) placé sur le chemin optique du faisceau pulsé (IR) du rayonnement laser de longueur d'onde supérieure pour retarder des impulsions du rayonnement laser de longueur d'onde supérieure par rapport à des impulsions du faisceau de rayonnement de longueur d'onde inférieure (UV),
- un moyen optique (7) destiné à changer la position du plan focal du faisceau de longueur d'onde supérieure (IR) par rapport au plan focal du faisceau de longueur d'onde inférieure (UV) le long de la profondeur dudit support transparent (11), et placé sur le chemin optique d'au moins un faisceau pulsé de rayonnement laser, face audit moyen de focalisation optique (10),
ladite source laser qui engendre deux faisceaux pulsés de rayonnement laser de longueurs d'onde différentes comprend une source primaire (1) de faisceau laser pulsé sur le chemin optique duquel sont placés un convertisseur optique conçu pour former deux faisceaux pulsés (IR, UV) de longueurs d'onde différentes, et un moyen optique (20) destiné à régler le rapport d'énergie pulsée des faisceaux pulsés de longueurs d'onde différentes.

9. Dispositif selon la revendication 8, **caractérisé en ce que** le convertisseur optique conçu pour former deux faisceaux pulsés de longueurs d'onde différentes comprend :
un séparateur de faisceau polarisant (2) qui divise le rayonnement laser de la source laser primaire (1) en deux parties et qui les dirige respectivement sur deux chemins optiques (18, 19), et
un générateur d'harmoniques (13) destiné à convertir la longueur d'onde du rayonnement laser, et placé sur le chemin optique (19) du faisceau de rayonnement laser de longueur d'onde inférieure, dans lequel :
sur le chemin optique (18) du faisceau de rayonnement laser de longueur d'onde supérieure sont placés le moyen de retard optique (4, 3, 5) et le moyen optique (7) destiné à changer la position du plan focal.

10. Dispositif selon la revendication 8, **caractérisé en ce que** le convertisseur optique conçu pour former deux faisceaux pulsés de longueurs d'onde différentes est le générateur d'harmoniques (13) placé sur le chemin optique du faisceau de rayonnement de la source laser primaire (1), destiné à convertir une partie du rayonnement laser de la source laser primaire (1) en rayonnement laser de longueur d'onde inférieure, dans lequel sur le même chemin optique sont placés le moyen de retard optique (4, 3, 5) destiné à retarder une autre partie du rayonnement laser de la source laser primaire (1) de longueur d'onde supérieure et le moyen optique (7) destiné à changer la position relative du plan focal.

11. Dispositif selon l'une quelconque des revendications 8 à 10, **caractérisé en ce que** le moyen optique destiné à régler le rapport d'énergie pulsée des faisceaux des deux longueurs d'onde comprend une lame demi-onde rotative (20) placée sur le chemin optique du rayonnement laser de la source laser primaire (1).

12. Dispositif selon l'une quelconque des revendications 8 à 11, **caractérisé en ce que** le moyen optique destiné à changer le plan focal du faisceau de rayonnement laser d'une longueur d'onde par rapport au plan focal du faisceau de rayonnement laser de l'autre longueur d'onde est l'expanseur de faisceau laser (7) placé au moins sur l'un de ces chemins optiques (18, 19), face audit moyen de focalisation optique (10).
